# EUROPÄISCHE PATENTSCHRIFT

(11) **EP 1 222 071 B1**
(45) Veröffentlichungstag und Bekanntmachung des Hinweises auf die Patenterteilung: **14.05.2003**
(21) Anmeldenummer: 00975762.6
(22) Anmeldetag: 15.09.2000
(51) Int. Cl.: B32B 31/20

(54) **VORRICHTUNG ZUM ABSCHNITTSWEISEN LAMINIEREN EINES SCHICHTAUFBAUS AUS MINDESTENS ZWEI KUNSTSTOFFBÄNDERN**
DEVICE FOR LAMINATING A LAYERED STRUCTURE CONSISTING OF AT LEAST TWO PLASTIC STRIPS IN SECTIONS
DISPOSITIF PERMETTANT DE LAMINER PAR SEGMENTS UNE STRUCTURE STRATIFIEE CONSTITUEE D'AU MOINS DEUX BANDES EN MATIERE PLASTIQUE

(30) Priorität: 17.09.1999 DE 19944769; 30.09.1999 DE 19946928; 20.10.1999 DE 19950474
(43) Veröffentlichungstag der Anmeldung: 17.07.2002
(73) Patentinhaber: MELZER MASCHINENBAU GmbH, D-58332 Schwelm (DE)
(72) Erfinder: MELZER, Rainer, 58332 Schwelm (DE); MELZER, Roland, 58332 Schwelm (DE)
(74) Vertreter: Sparing, Rolf Klaus
(86) Internationale Anmeldenummer: DE0003213
(87) Internationale Veröffentlichungsnummer: WO01021401

(56) Entgegenhaltungen:
- EP-A- 0 134 820
- DE-A- 3 413 053
- FR-A- 2 219 841

## Beschreibung

Die Erfindung betrifft eine Vorrichtung zum abschnittsweisen Laminieren eines Schichtaufbaus nach dem Oberbegriff des Anspruchs 1.

Die Erfindung betrifft auch ein Verfahren zum abschittsweisen Laminieren eines Schichtaufbaus.

EP-B-0 134 820 beschreibt eine Vorrichtung, die für eine kontinuierliche Herstellung von Kunststoffkarten, insbesondere Kreditkarten, Scheckkarten, Accesskarten usw. einen synchronen Zulauf von Kunststoffbändern in eine Laminieranlage zur Bildung eines Schichtstoffes erlaubt. Die Kunststoffbänder bestehen aus einzelnen voneinander getrennten Nutzen, die ein- oder mehrreihig hintereinander angeordnet sind. Die Laminieranlage umfaßt Heizund Kühleinrichtungen aus auf einem Längsträger angeordneten temperierbaren Preßorganen, deren Abmessungen zur Behandlung jeweils einer ganzzahligen Anzahl von Nutzen gewählt sind und ein abschnittsweises Verbacken der einen Schichtaufbau bildenden Kunststoffbänder mit anschließendem Kühlen erlauben. Die mindestens zwei Kunststoffbänder werden durch Anordnung zwischen einander zugekehrten, taktweise antreibbaren, endlosen Preßbändem in Behandlungszonen für die Preßorgane bewegt, in denen die Wärme-Druck-Einwirkung und die Kühl-Druck-Einwirkung auf die Kunststoffbänder übertragen werden. Die Kunststoffbänder werden hierdurch abschnittsweise laminiert. Die Preßorgane umfassen dazu jeweils einen feststehenden unteren sowie einen beweglichen oberen Preßbalken, zwischen die die Preßbänder während der Wärme/Kühl-Druck-Behandlung in Anlage gelangen.

Als nachteilig erwiesen hat sich jedoch, daß bei schneller Behandlung die temperierte Bahn mit hohen Temperaturen der zu laminierenden Kunststoffbänder zu hohen lokalen Ausdehnungen und Schrumpfungen der Preßbänder als auch gegebenenfalls der Kunststoffbänder führt, und zwar insbesondere im Randbereich der Preßzonen, wo diskontinuierliche Temperatur- und Druckbedingungen herrschen. Dies führt zu hoher Belastung mit Druck- und Zugkräften und ggf. zu Beschädigungen der Preßbänder, so daß diese einem hohen Verschleiß unterliegen. Wenn zur Erhöhung der Produktionsgeschwindigkeit mit kürzesten Standzeiten für eine Wärmebehandlung, dafür aber hohen Temperaturen gearbeitet wird, erhöht sich dieser nachteilige Verschleiß. Weiterhin entstehen Laminierfehler an den Nutzen die zu einer unerwünschten Ausschußrate führen, da die Forderung an die fehlerfreie Oberfläche solcher Kunststoffkarten hoch ist.

DE-C-42 05 746 beschreibt eine Vorrichtung zum Verkleben flächenförmiger Werkstücke, insbesondere zum Kaschieren von plattenförmigen Kunststoffteilen, in der nacheinander eine Auflegestation, eine Heizstation, eine Preßstation und eine außerhalb der Preßstation angeordnete Kühlstation angeordnet sind. Die zu verklebenden Werkstücke werden einzeln nacheinander über ein unteres Transportband erst durch die Heizstation und anschließend durch ein Preßwalzenpaar der Preßstation geführt. Die von dem Preßwalzenpaar definierte Preßstation dient zugleich als Umlenkrolle für Transportbänder und ist gegenüber der Förderstrecke nicht bewegbar. Die Heizstation umfaßt zwei Heizplatteneinheiten, welche jeweils eine Gliederkette aus mehreren Kettengliedern aufweisen, auf denen quer zur Förderrichtung verlaufende Querträger mit Heizkörpern montiert sind. Die Glieder der Gliederkette sind über Zwischenglieder jeweils beidseitig mit einem Antriebszylinder über eine Antriebsstange verbunden, durch dessen Betätigung die beiden Gliederketten der Heizplatteneinheiten zueinander parallel, im wesentlichen in dieselbe Richtung ausgebaucht oder auch keilförmig zusammenlaufend ausgestaltet werden können. Die Gliederkletten der Heizplatteneinheit sind zwar einstellbar, jedoch ermöglicht diese Einstellung aufgrund der statisch ausreichend bestimmten feststehenden Lage der Antriebszylinder weder eine bewegbare Anordnung der Heizkörper oder gar der Preßstation noch die Bewegung in Richtung der Förderstrecke. Ein kühlende Presse ist nicht vorgesehen. Die Lage der Kettenglieder ist statisch.

Es ist die Aufgabe der Erfindung, eine Vorrichtung nach dem Oberbegriff des Anspruchs 1 und ein Verfahren zu schaffen, die die Herstellung von Kunststoffkarten mit hoher Laminierqualität bei hohen Produktionsgeschwindigkeiten erlauben.

Diese Aufgabe wird bei der eingangs genannten Vorrichtung erfindungsgemäß mit den kennzeichnenden Merkmalen des Anspruchs 1 und bei dem Verfahren gemäß Anspruch 14 gelöst.

Hierdurch wird eine Vorrichtung zum abschnittsweisen Laminieren eines Schichtaufbaus aus mindestens zwei Kunststoffbändern mit aufeinanderfolgend ausgebildeten Nutzen zur Herstellung von Kunststoffkarten entlang einer Förderstrecke geschaffen, die die temperaturbedingten lokalen Längenänderungen der Preßbänder überträgt auf die Positionierung der Preßorgane, indem diese axialen Verschiebungen folgen können und dadurch einen Ausgleich ermöglichen. Unerwünschte Belastungen der Preßbänder als auch der Kunststoffbänder in Längsrichtung werden dadurch vermieden. Damit ist ein Betrieb auch bei kurzen Taktzeiten und hieraus folgenden hohen Temperaturen störungsfrei möglich.

Vorteilhaft hierbei ist, daß durch eine konstruktive Ableitung der auftretenden axialen Verzerrungskräfte die Vorrichtung direkt anspricht, so daß aufwendige Steuerungen für diesen Zweck entfallen können.

Die erfindungsgemäße Vorrichtung entkoppelt vorteilhaft benachbarte Preßorgane, so daß die Preßorgane in Förderrichtung zueinander einen geringfügige Abstandsänderung aufweisen können. Hierdurch ist es möglich, die getaktet oder intermittierend angetriebenen Preßbänder und die hieran anliegenden Kunststoffbänder, die aufgrund der verschieden temperierten Preßorgane örtlich verschiedenen Temperaturen ausgesetzt sind, genau in den Preßorganen zu positionieren. Die sonst auf die Preßbänder oder Kunststoffbänder wirkenden Spannungen werden hierdurch stark herabgesetzt.

In einer vorteilhaften Ausgestaltung der Erfindung ist vorgesehen, daß bei einem Produktionsstopp eine den oberen Preßbalken anhebende Anhebeeinrichtung zur weiten Öffnung der Preßorgane betätigbar ist, wobei im normalen Betrieb die Öffnungsbewegung des oberen Preßbalken gering ist, um den Vorschub der Preßbänder zu ermöglichen. Femer ist eine Hubeinrichtung vorgesehen, die im Falle eine Produktionsstopps die Preßbänder gleichzeitig anhebt, um eine Kontaktbrücke zwischen den Preßbändem und dem unteren Preßbalken beim Öffnen des Preßorgans zu unterbrechen. Hierbei werden die Preßbänder in eine in etwa mittig angeordnete Lage zwischen den unteren und den oberen Preßbalken verlagert. Eine unerwünschte Überhitzung der Preßbänder wird hierdurch vermieden, da die Preßbänder dann nur noch während der Wärme-Druck-Behandlung selbst als Wärmeübertrager dienen. Die Standzeiten der Preßbänder erhöht sich hierdurch wesentlich. Insbesondere im Fall einer Störung oder Wartung wird eine Überhitzung der Kunststoffbänder wirksam unterbunden, die sonst umfangreiche Rüstarbeiten nach sich ziehen würde.

Zweckmäßigerweise sind die Preßbänder jeweils über eine außerhalb der Preßorgane angeordnete Einlauftrommel und eine Auslauftrommel gelegt. Wenigstens eine der Trommeln weist einen umlaufenden Präzisionsstachelabschnitt auf, der mit einer in einer Randzone eines zugeordneten Preßbands vorgesehenen Transportlochung in Antriebsverbindung steht. Der Stachelabschnitt ermöglicht eine exakte Abstimmung und schlupffreie Führung des Preßbands. Die Höhe der Stachel beträgt ca. 0,5 mm. Die Stachel weisen eine nach oben abgerundete Form auf. Vorzugsweise ist jede der Trommeln mit einem Stachelabschnitt versehen, wobei zur Vermeidung eines Aufeinanderstoßens der Stachel die Einlauftrommeln und die Auslauftrommeln zueinander versetzt sind. Vorzugsweise ist der Versatz der Trommeln im Einlaufbereich und im Auslaufbereich identisch und in dieselbe Richtung, so daß ein identisches Band für beide Preßbänder zum Einsatz kommen kann.

Weitere Vorteile und Merkmale der Erfindung ergeben sich aus der nachfolgenden Beschreibung sowie aus den abhängigen Ansprüchen.

Die Erfindung wird nachstehend unter Bezugnahme auf die anliegenden Zeichnungen anhand bevorzugter Ausführungsbeispiele näher erläutert.
- Fig. 1: zeigt schematisch eine Seitenansicht eines ersten Ausführungsbeispiels einer erfindungsgemäßen Vorrichtung zum abschnittsweisen Laminieren als Teilstation einer kompletten Anlage zur Herstellung von Kunststoffkarten.
- Fig. 2: zeigt schematisch eine Seitenansicht der Vorrichtung aus Fig. 1 mit angehobenem oberen Preßbalken.
- Fig. 3: zeigt schematisch eine Teilseitenansicht eines zweiten Ausführungsbeispiels einer erfindungsgemäßen Vorrichtung zum abschnittsweisen Laminieren als Teilstation einer kompletten Anlage zur Herstellung von Kunststoffkarten.

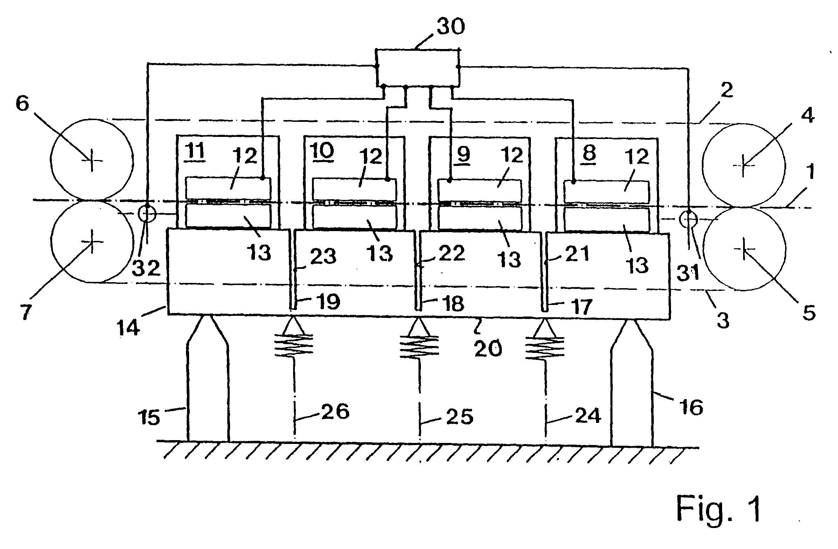

Fig. 1 zeigt eine Vorrichtung zum abschnittsweisen Laminieren eines Schichtaufbaus 1 aus mindestens zwei Kunststoffbändern mit aufeinanderfolgend ausgebildeten Nutzen als Teilstation einer Anlage zur Herstellung von Kunststoffkarten entlang einer Förderstrecke. Die den Schichtaufbau 1 bildenden Kunststoffbänder werden synchron zugeführt, wobei die verschiedenen zu einem Schichtstoff zu laminierenden Kunststoffbänder zuvor unterschiedliche Bearbeitungsstationen durchlaufen haben, in denen die Nutzen mit Synchronisationslöchern sowie mit Druckbildem, Informationsträgern, Stanzungen usw. versehen worden sein können, um die herzustellenden Kunststoffkarten für den jeweils vorgesehenen Verwendungszweck auszustatten. Die durchschnittliche Dicke der zu verarbeitenden Kunststoffbänder liegt vorzugsweise bei etwa 0,1 bis 3 mm, je nachdem wieviele Kunststoffbänder einen Schichtaufbau 1 bilden. Die Gesamtdicke der fertigen Kunststoffkarten liegt üblicherweise im Bereich um 0,8 mm. Vorzugsweise werden vier Kunststoffbänder zu einem Schichtaufbau 1 zusammengeführt, und zwar ein ober- und unterseitiges Klarsichtfolienband und zwei mittlere bedruckte Einlegestreifenbänder.

Nachdem die mindestens zwei Kunststoffbänder zusammengeführt worden sind, bilden sie den Schichtaufbau 1, der in einen Nip zwischen zwei Preßbändem 2, 3 einläuft. Die Preßbänder 2, 3 werden von zwei in sich geschlossenen, einander zugekehrten, endlosen Bändern gebildet, die jeweils über eine Einlauftrommel 4, 5 und eine Auslauftrommel 6, 7 gelegt sind. Mindestens eines der Bänder, z.B. das untere Band, wird schrittweise angetrieben und nimmt bei seiner Umlaufbewegung den Schichtaufbau 1 und das andere Band mit, sofern diese nicht synchron mit angetrieben werden. In ihren äußeren Rändern weisen die Preßbänder 2, 3 eine fortlaufende Transportlochung auf, die mit einem Stachelabschnitt der vier Trommeln 4, 5, 6, 7 jeweils kämmt und eine eindeutige, zueinander unveränderbare Position festlegt. Damit die Preßbänder 2, 3 als schlupffreie Mitnehmer für den Schichtaufbau 1 arbeiten, sind Einrichtungen für einen registerhaltigen Transport in Förderrichtung vorgesehen. Derartige Einrichtungen sind vorliegend an mindestens einem Preßband vorgesehene Stifte, die in fluchtende Registerlöcher des Schichtaufbaus 1 und des anderen Preßbands eingreifen. Alternativ sind auch Hafteinrichtungen einsetzbar. Die Lage des Schichtaufbaus 1 zwischen den Preßbändern 2, 3 wird hierdurch festgelegt. Ein Antrieb des mit den Stiften und der Transportlochung versehenen Preßbands führt zu lagegenauen Positionen des Schichtaufbaus 1 in nachfolgend beschriebenen Heizeinrichtungen und Kühleinrichtungen. Hierdurch prägt die dem Schichtaufbau zugewandte Oberfläche der Preßbänder 2, 3 die Oberfläche des Schichtaufbaus.

Entlang der Preßbänder 2, 3 sind aufeinanderfolgend Heizeinrichtungen 8, 9 und Kühleinrichtungen 10, 11 angeordnet, die von einzelnen temperierbaren Preßorganen gebildet werden. Die Anzahl der nebeneinander angeordneten Heizeinrichtungen 8, 9 und Kühleinrichtungen 10, 11 ist wählbar. Die Heizeinrichtungen 8, 9 und die Kühleinrichtungen 10, 11 sind jeweils beabstandet zueinander angeordnet, wobei ihre Beabstandung der Beabstandung der Nutzen des Schichtaufbaus 1 folgt, damit die Heiz- und Kühleinrichtungen 8, 9, 10, 11 jeweils auf eine ganzzahlige Anzahl Nutzen einwirken.

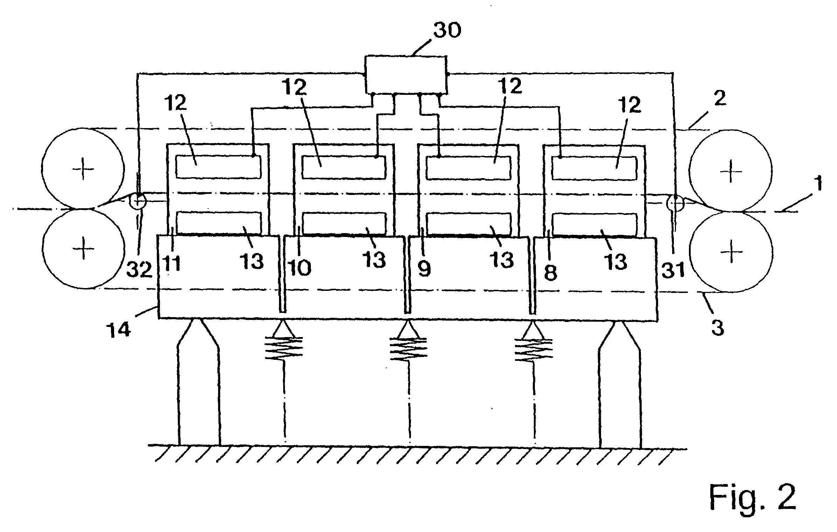

Die Heizeinrichtungen 8, 9 und Kühleinrichtungen 10, 11 sind als Preßorgane mit jeweils einem oberen Preßbalken 12 und einem unteren Preßbalken 13 ausgebildet. Zwischen dem oberen Preßbalken 12 und dem unteren Preßbalken 13 einer Anzahl von Preßorganen läuft der Schichtaufbau 1, geführt zwischen den beiden Preßbändem 2, 3, in einer Förderrichtung, die in Fig. 1 und 2 von rechts nach links verläuft, durch. Die als Heizeinrichtungen 8, 9 ausgebildeten Preßorgane sind elektrisch oder mittels eines temperierbaren Fluids beheizbar, während die als Kühleinrichtungen 10, 11 ausgebildeten Preßorgane vorzugsweise wassergekühlt sind. Es ist alternativ möglich, jede der Heizeinrichtungen 8, 9 und Kühleinrichtungen 10, 11 mit einem eigenen oberen und unteren Stempel zu versehen.

Fig. 1 zeigt die jeweils zwei Preßbalken 12, 13 in einer geschlossenen Stellung der Preßorgane für eine temperierte Druckbehandlung des Schichtaufbaus 1, wobei zumindest der obere Preßbalken 12 nach Art eines Stempels beweglich ist, um eine Druckkraft auf den unteren Preßbalken 13 auszuüben. Nach Beendigung einer temperierten Druckbehandlung werden die Preßorgane durch geringes Anheben des jeweils oberen Preßbalkens 12 geöffnet und die Preßbänder 2, 3 mit dem abschnittsweise behandelten Schichtaufbau 1 in Förderrichtung weiterbewegt, beispielsweise der in den Heizeinrichtungen 8, 9 behandelte Abschnitt des Schichtaufbaus 1 in den Bereich der Kühleinrichtungen 10, 11 bewegt.

Im normalen Betrieb wird der obere Preßbalken ein kleines Stück angehoben, die Preßbänder verlagert, und der obere Preßbalken wieder abgesenkt, um die Temperatur zu übertragen. Bei einem Produktionsstopp wird das weite Öffnen des oberen Preßbalkens 12 durch eine Steuereinrichtung 30 erkannt, insbesondere durch diese veranlaßt und bestimmt, die eine Hubeinrichtung 31, 32 betätigt, um die Preßbänder 2, 3, die zwischen den Preßbalken 12, 13 zur Anlage gelangen, von den unteren Preßbalken 13 abzuheben, wenn die Preßorgane weit öffnen. Die Hubeinrichtung 31, 32 wird hier von ein- und ausgangsseitig der Heiz- und Kühleinrichtungen 8, 9, 10, 11 angeordneten Hebem gebildet, die gegenüber einer Außereingriffsstellung in bezug auf die Preßbänder 2, 3 mit einer Vertikalkomponente nach oben verfahrbar sind, wie in Fig. 2 dargestellt. Die zwischen den Preßbalken 12, 13 der Preßorgane sich erstreckenden Preßbänder 2, 3 werden hierdurch entlang der durch die Heizund Kühleinrichtungen definierten Behandlungszone deutlich außer Anlage mit den unteren Preßbalken 13 und vorzugsweise in eine angehobene Mittelstellung zwischen die beiden Preßbalken verbracht, wenn der obere Preßbalken 12 weit öffnet oder weit geöffnet hat. Der Abstand der Preßbänder 2, 3 zu dem unteren und/oder zu dem oberen Preßbalken 13, 12 beträgt vorzugsweise zwischen 1 cm und 35 cm.

Alternativ zu den in Fig. 1 und 2 dargestellten Hebern können andere Hubeinrichtungen, beispielsweise eine Preßluftbeaufschlagung, vorgesehen werden.

Die einzelnen Preßorgane sind hinsichtlich ihrer Temperatur und des von ihnen ausgeübten Drucks individuell einstellbar, wobei für den Aufheiz- und Abkühlvorgang der Schichtaufbau 1 zwischen den Pressen stehen bleibt. Temperatur und Druck sind derart gewählt, daß der verbackene und abgekühlte Schichtaufbau 1 einen stabilen Schichtstoff bildet. Für einen schrittweisen Vorschub des Schichtaufbaus 1 werden die Pressen jeweils gering geöffnet. Dann wird der Abschnitt des Schichtaufbaus 1, der von den Heizeinrichtungen 8, 9 behandelt wurde, mit einem taktweisen Vorschub in den Behandlungsbereich der Kühleinrichtungen 10, 11 bewegt, so daß vorzugsweise der Schichtaufbau 1 abschnittsweise einen Aufheiz- und einen Abkühlvorgang durchläuft. Die Dauer der Aufheiz- und Abkühlvorgänge bestimmt die Taktzeiten.

Die Heizeinrichtungen 8, 9 und Kühleinrichtungen 10, 11 sind auf einem gemeinsamen Träger 14 angeordnet, der die einzelnen Preßorgane der Heizeinrichtungen 8, 9 und der Kühleinrichtungen 10, 11 entgegen einer Rückstellkraft axial verschiebbar zueinander aufstellt. Die unteren Preßbalken 13 sind auf dem Träger 14 angeordnet.

Gemäß Fig. 1 ist der Träger 14 als ein gerader Längsträger ausgebildet, der an beiden Enden abgestützt ist durch Auflager 15, 16 und Sollbiegestellen 17, 18, 19 zwischen jeweils zwei aufeinanderfolgenden Preßorganen der Heiz- und Kühleinrichtungen 8, 9, 10, 11 aufweist. Die Sollbiegestellen 17, 18, 19, die eine lokale Durchbiegung oder Aufbiegung des Trägers 14 erlauben, werden von in Richtung einer Längsträgerabstützfläche 20 sich erstreckende Schlitze 21, 22, 23 gebildet, unterhalb denen der Träger 14 federnd auf Auflagern 24, 25, 26 aufliegt. Die Schlitze 21, 22, 23 durchtrennen den Träger 14 quer zur Längsachse teilweise, wobei die Schlitzlänge in Richtung Abstützfläche 20 das Biegemaß bestimmt. Wesentlich hierbei ist, daß die Sollbiegestellen 17, 18, 19 jeweils zwischen den einzelnen Heiz- und Kühleinrichtungen 8, 9, 10, 11 quer zur Längsachse liegen, und zwar möglichst mittig zwischen diesen, um Ausdehnungen und Schrumpfungen der Preßbänder 2, 3 folgen zu können, wodurch diese entlastet werden.

Durch die vorstehend beschriebene konstruktive Gestaltung kann eine durch Temperaturveränderung bedingte Schrumpfung oder Dehnung der Preßbänder 2, 3 als auch gegebenenfalls des Schichtaufbaus 1 im Bereich zwischen zwei Heiz- und Kühleinrichtungen 8, 9, 10, 11 eine lokale Auf- oder Durchbiegung des Trägers 14 in diesem zugeordneten Bereich bewirken, wodurch sich der Abstand zwischen den jeweils zwei Heiz- und Kühleinrichtungen 8, 9, 10, 11 vergrößert oder verkleinert. Diese Last baut eine Rückstellkraft auf, die aus der von den Schlitzen 21, 22, 23 belassenen Reststarrheit des Trägers 14 und den federnden Auflagern 24, 25, 26 folgt. Der konstruktiv bewirkte Ausgleich einer durch die Preßbänder 2, 3 bedingten zeitweiligen Auf- oder Durchbiegung ist einzeln durchführbar, d.h. die verschiedenen Sollbiegestellen können unterschiedlich belastet werden.

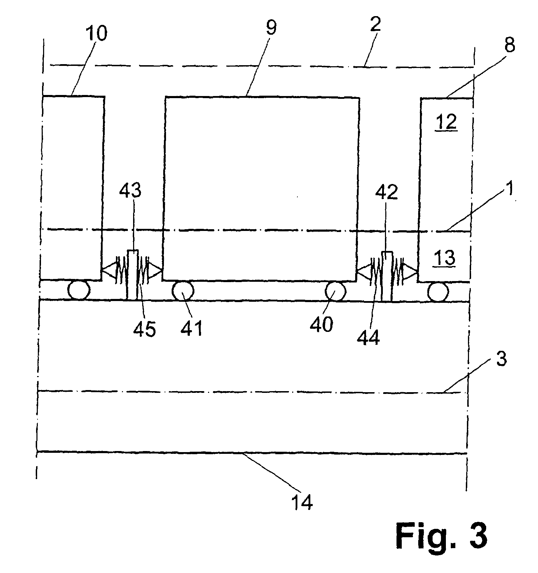

Fig. 3 zeigt ein zweites Ausführungsbeispiel einer Vorrichtung zum abschnittsweisen Laminieren eines Schichtaufbaus 1 aus mindestens zwei Kunststoffbändem mit aufeinanderfolgend ausgebildeten Nutzen zur Herstellung von Kunststoffkarten entlang einer Förderstrecke, das sich von dem vorstehend beschriebenen ersten Ausführungsbeispiel dadurch unterscheidet, daß zur axialen Verschiebbarkeit der einzelnen Preßorgane zueinander entgegen einer Rückstellkraft die aufeinanderfolgenden Preßorgane der Heiz- und Kühleinrichtungen 8, 9, 10, 11 über Rollenlagerungen 40, 41 gegenüber dem Längsträger 14 axial verschiebbar zueinander angeordnet sind. Dabei stützen sich in Förderrichtung die Preßorgane jeweils zwischen zwei die axiale Verschiebbarkeit begrenzenden Anschlägen 42, 43 über Federn 44, 45 an diesen ab.

Durch die vorstehend beschriebene konstruktive Gestaltung kann eine durch eine Temperaturveränderung bedingte Schrumpfung oder Dehnung der in die Heizeinrichtungen 8, 9 und Kühleinrichtungen 10, 11 gelangenden Preßbänder 2, 3 im Bereich zwischen zwei Heiz- und Kühleinrichtungen 8, 9, 10, 11 zu einer lokalen axialen Verschiebung eines Preßorgans einer Heiz- oder Kühleinrichtung führen. Die einstellbaren Federkräfte stellen den Gleichgewichtszustand wieder her, bei der das jeweilige Preßorgan eine Grundstellung einnimmt.

## Patentansprüche

1. Vorrichtung zum abschnittsweisen Laminieren eines Schichtaufbaus (1) aus mindestens zwei Kunststoffbändern mit aufeinanderfolgend ausgebildeten Nutzen zur Herstellung von Kunststoffkarten entlang einer Förderstrecke, umfassend
aufeinanderfolgend angeordnete Heiz- und Kühleinrichtungen (8, 9, 10, 11), die von einzelnen temperierbaren, eine ganzzahlige Anzahl Nutzen aufnehmenden Preßorganen gebildet sind, die auf einem gemeinsamen Träger (14) angeordnet sind, und
eine Antriebseinheit, die einander zugekehrte, in einer Förderrichtung intermittierend antreibbare Preßbänder (2, 3), zwischen denen die Kunststoffbänder abschnittsweise durch die Heiz- und Kühleinrichtungen bewegbar sind, verlagert,
**dadurch gekennzeichnet,**
**daß** die Preßorgane in Richtung der Förderstrecke entgegen einer auf ihre Ausgangslage wirksame Rückstellkraft bewegbar angeordnet sind.

2. Vorrichtung nach Anspruch 1, **dadurch gekennzeichnet, daß** die aufeinanderfolgenden Preßorgane auf einem an beiden Enden abgestützten geraden Längsträger (14) angeordnet sind, der Sollbiegestellen (17, 18, 19) zwischen jeweils zwei aufeinanderfolgenden Preßorganen aufweist.

3. Vorrichtung nach Anspruch 2, **dadurch gekennzeichnet, daß** die Sollbiegestellen (17, 18, 19) zur Ausbildung einer Durchbiegung oder Aufbiegung von in Richtung einer Längsträgerabstützfläche (20) sich erstreckenden Schlitzen (21, 22, 23) gebildet werden, unterhalb denen der Längsträger (14) federnd aufliegt.

4. Vorrichtung nach Anspruch 3, **dadurch gekennzeichnet, daß** die Schlitze (21, 22, 23) den Längsträger (14) quer zur Förderstrecke durchsetzen.

5. Vorrichtung nach Anspruch 1, **dadurch gekennzeichnet, daß** die aufeinanderfolgenden Preßorgane über Rollenlagerungen (40, 41) gegenüber dem Längsträger (14) axial verschiebbar zueinander angeordnet sind.

6. Vorrichtung nach Anspruch 5, **dadurch gekennzeichnet, daß** in Förderrichtung die Preßorgane jeweils zwischen zwei an die axiale Verschiebbarkeit begrenzenden Anschlägen (42, 43) sich abstützenden Federn (44, 45) angeordnet sind.

7. Vorrichtung nach einem der Ansprüche 1 bis 6, **dadurch gekennzeichnet, daß** eines der Preßbänder (2, 3) Positionierstifte aufweist, die in Registeröffnungen der Kunststoffbänder und des anderen Preßbands eingreifen für eine positioniergenaue Führung der Kunststoffbänder in einem Schichtverband durch die Preßorgane.

8. Vorrichtung nach einem der Ansprüche 1 bis 7, **dadurch gekennzeichnet, daß** Temperatur, Druck und Bearbeitungszeit der beheizbaren Preßorgane mittels einer Steuereinheit einstellbar sind.

9. Vorrichtung nach Anspruch 8, **dadurch gekennzeichnet, daß** eine Bearbeitungszeit der kühlbaren Preßorgane in Abhängigkeit von der Bearbeitungszeit der beheizbaren Preßorgane mittels der Steuereinheit einstellbar ist.

10. Vorrichtung nach einem der Ansprüche 1 bis 9, **dadurch gekennzeichnet, daß** ein feststehender unterer Preßbalken (13) und ein beweglicher oberer Preßbalken (12) vorgesehen sind, und daß eine die Preßbänder (2, 3) gegenüber dem unteren Preßbalken (13) anhebende Hubeinrichtung (31, 32) vorgesehen ist, die von einer ein Öffnen des oberen Preßbalkens (12) erkennenden Steuereinrichtung (30) betätigbar ist.

11. Vorrichtung nach Anspruch 10, **dadurch gekennzeichnet, daß** die Hubeinrichtung (31, 32) von ein- und ausgangsseitig der Heiz- und Kühleinrichtungen (8, 9, 10, 11) angeordneten, verfahrbaren Hebern gebildet ist.

12. Vorrichtung nach einem der Ansprüche 1 bis 11, **dadurch gekennzeichnet, daß** die Preßbänder (2, 3) jeweils über eine Einlauftrommel (4, 5) und eine Auslauftrommel (6, 7) gelegt sind, und daß die Einlauftrommel (4, 5) und die Auslauftrommel (6, 7) außerhalb der Preßorgane angeordnet sind, und daß wenigstens eine der Trommeln (4, 5, 6, 7) einen umlaufenden Präzisionsstachelabschnitt ausweist, der mit einer in einer Randzone eines zugeordneten Preßbands vorgesehenen Transportlochung in Antriebsverbindung steht.

13. Vorrichtung nach Anspruch 12, **dadurch gekennzeichnet, daß** die Trommeln wenigstens eines der Paare Einlauftrommel (4, 5) und Auslauftrommel (6, 7) in Förderrichtung zueinander versetzt angeordnet sind und einen umlaufenden Präzisionsstachelabschnitt aufweisen.

14. Verfahren zum Herstellen von Kunststoffkarten mit einer Vorrichtung nach einem der Ansprüche 1 bis 13,
mit abwechselndem Fördern der mindestens zwei Kunststoffbänder und Betätigen der Preßorgane, wobei jeder Nutzen wenigstens eine Heizeinrichtung (8, 9) und eine Kühleinrichtung (10, 11) durchläuft.

## Claims

1. A device for laminating in sections a layered structure (1) consisting of at least two plastic strips, comprising successively formed panels with designs, for producing plastic cards along a conveying path, comprising
successively arranged heating and cooling devices (8, 9, 10, 11), which are formed by individual temperature-controllable pressing elements which accommodate an integer number of panels and are arranged on a common support (14), and
a drive unit, which displaces mutually facing pressing bands (2, 3) which can be driven intermittently in a conveying direction and between which the plastic strips can be moved in sections through the heating and cooling devices,
**characterized in**
**that** the pressing elements are arranged such that they can be moved in the direction of the conveying path against a restoring force which acts toward their initial position.

2. The device as claimed in claim 1, **characterized in that** the successive pressing elements are arranged on a straight longitudinal support (14), which is supported at both ends and has predetermined bending points (17, 18, 19) between respective pairs of successive pressing elements.

3. The device as claimed in claim 2, **characterized in that**, to create sagging or upward bending, the predetermined bending points (17, 18, 19) are formed by slits (21, 22, 23), which extend in the direction of a supporting surface (20) of the longitudinal support and beneath which the longitudinal support (14) resiliently rests.

4. The device as claimed in claim 3, **characterized in that** the slits (21, 22, 23) go through the longitudinal support (14) transversely with respect to the conveying path.

5. The device as claimed in claim 1, **characterized in that** the successive pressing elements are arranged in relation to one another such that they can be displaced axially with respect to the longitudinal support (14) by means of roller mountings (40, 41).

6. The device as claimed in claim 5, **characterized in that** the pressing elements are arranged in the conveying direction respectively between two springs (44, 45) supported on stops (42, 43), limiting the axial displaceability.

7. The device as claimed in one of claims 1 to 6, **characterized in that** one of the pressing bands (2, 3) has positioning pins, which engage in register openings of the plastic strips and of the other pressing band for a positionally exact guidance of the plastic strips in a laminar structure through the pressing elements.

8. The device as claimed in one of claims 1 to 7, **characterized in that** the temperature, pressure and processing time of the heatable pressing elements are adjustable by means of a control unit.

9. The device as claimed in claim 8, **characterized in that** a processing time of the coolable pressing elements is adjustable in dependence on the processing time of the heatable pressing elements by means of the control unit.

10. The device as claimed in one of claims 1 to 9, **characterized in that** a fixed lower pressing bar (13) and a movable upper pressing bar (12) are provided, and that a lifting device (31, 32), raising the pressing bands (2, 3) with respect to the lower pressing bar (13), is provided and can be actuated by a control device (30), detecting an opening of the upper pressing bar (12).

11. The device as claimed in claim 10, **characterized in that** the lifting device (31, 32) is formed by movable lifters which are arranged on the inlet and outlet sides of the heating and cooling devices (8, 9, 10, 11).

12. The device as claimed in one of claims 1 to 11, **characterized in that** the pressing bands (2, 3) are respectively placed over a running-in drum (4, 5) and a running-out drum (6, 7), and **in that** the running-in drum (4, 5) and the running-out drum (6, 7) are arranged outside the pressing elements, and **in that** at least one of the drums (4, 5, 6, 7) has a peripheral portion with precision spikes, which is in drive connection with a transporting perforation provided in an edge zone of an assigned pressing band.

13. The device as claimed in claim 12, **characterized in that** the drums of at least one of the pairs of running-in drum (4, 5) and running-out drum (6, 7) are arranged offset in relation to one another in the conveying direction and have a peripheral portion with precision spikes.

14. A method of producing plastic cards with a device as claimed in one of claims 1 to 13, with alternately conveying the at least two plastic strips and actuating the pressing elements, each panel running through at least one heating device (8, 9) and one cooling device (10, 11).

## Revendications

1. Dispositif permettant de laminer par segments une structure stratifiée **(1)** constituée d'au moins deux bandes en matière plastique à deux flans successifs pour la fabrication de cartes en matière plastique le long d'une voie de transport, comprenant
des dispositifs de chauffage et de refroidissement **(8, 9, 10, 11)** placés les uns derrière les autres, qui sont formés de divers organes de pressage régulables en température et recevant un nombre entier de flans, organes qui sont placés sur un support **(14)** commun, et
une unité d'entraînement qui déplace des bandes de pressage **(2, 3)** en vis-à-vis pouvant être entraînées par intermittence dans une direction de transport et entre lesquelles les bandes en matière plastique peuvent être déplacées par segments à travers les dispositifs de chauffage et de refroidissement,
**caractérisé en ce que** les organes de pressage sont placés mobiles dans la direction de la voie de transport contre une force de rappel agissant en direction de leur position de départ.

2. Dispositif selon la revendication 1, **caractérisé en ce que** les organes de pressage successifs sont placés sur un support longitudinal droit **(14)** soutenu aux deux extrémités, qui présente des zones de flexion imposée **(17, 18, 19)** entre deux organes de pressage successifs.

3. Dispositif selon la revendication 2, **caractérisé en ce que** les zones de flexion imposée **(17, 18, 19)** sont conformées de sorte à former une pliure ou un gauchissement de fentes **(21, 22, 23)** s'étendant dans la direction d'une surface d'appui de support longitudinal **(20)** et au-dessous desquels le support longitudinal **(14)** s'appuie de manière élastique.

4. Dispositif selon la revendication 3, **caractérisé en ce que** les fentes **(21, 22, 23)** traversent le support longitudinal **(14)** transversalement à la voie de transport.

5. Dispositif selon la revendication 1, **caractérisé en ce que** les organes de pressage successifs sont placés de manière mobile axialement par rapport au support longitudinal **(14)** par l'intermédiaire de paliers à roulements **(40, 41)**.

6. Dispositif selon la revendication 5, **caractérisé en ce que**, dans la direction de transport, les organes de pressage sont placés à chaque fois entre deux ressorts **(44, 45)** s'appuyant sur des butées **(42, 43)** limitant la mobilité axiale.

7. Dispositif selon l'une des revendications 1 à 6, **caractérisé en ce que** l'une des bandes de pressage **(2,3)** présente des ergots de positionnement qui s'engagent dans des ouvertures de coïncidence des bandes en matière plastique et de l'autre bande de pressage pour obtenir un guidage précis des bandes en matière plastique par les organes de pressage dans un composite stratifié.

8. Dispositif selon l'une des revendications 1 à 7, **caractérisé en ce que** la température, la pression et la durée de traitement des organes de pressage chauffables peuvent être réglés au moyen d'une unité de commande.

9. Dispositif selon la revendication 8, **caractérisé en ce qu'**une durée de traitement des organes de pressage refroidissables peut être réglée au moyen de l'unité de commande en fonction de la durée de traitement des organes de pressage chauffables.

10. Dispositif selon l'une des revendications 1 à 9, **caractérisé en ce qu'**une barre de pressage inférieure **(13)** stationnaire et une barre de pressage supérieure **(12)** mobile sont prévues, et **en ce qu'**un dispositif de levage **(31, 32)** soulevant les bandes de pressage **(2, 3)** par rapport à la barre de pressage inférieure **(13)** est prévu, qui est actionnable par un dispositif de commande **(30)** détectant une ouverture de la barre de pressage supérieure **(12)**.

11. Dispositif selon la revendication 10, **caractérisé en ce que** le dispositif de levage **(31, 32)** est formé d'élévateurs mobiles placés côté entrée et sortie des dispositifs de chauffage et de refroidissement **(8, 9, 10, 11)**.

12. Dispositif selon l'une des revendications 1 à 11, **caractérisé en ce que** les bandes de pressage **(2, 3)** sont posées sur un tambour d'entrée **(4, 5)** et sur un tambour de sortie **(6, 7),** et **en ce que** le tambour d'entrée **(4, 5)** et le tambour de sortie **(6, 7)** sont placés en dehors des organes de pressage, et **en ce qu'**au moins l'un des tambours **(4, 5, 6, 7)** présente une section à ergots de précision périphérique qui est en liaison. d'entraînement avec un orifice de transport prévu dans une zone de bord de la bande de pressage associée.

13. Dispositif selon la revendication 12, **caractérisé en ce que** les tambours constitués d'au moins une des paires de tambours d'entrée **(4, 5)** et tambours de sortie **(6, 7)** sont mutuellement décalés dans la direction de transport et présentent une section à ergots de précision périphérique.

14. Procédé de fabrication de cartes en matière plastique avec un dispositif selon l'une des revendications 1 à 13, avec transport intermittent des bandes en matière plastique au nombre d'au moins deux et actionnement des organes de pressage, chaque flan traversant au moins un dispositif de chauffage **(8, 9)** et un dispositif de refroidissement **(10, 11)**.
